# EUROPEAN PATENT APPLICATION

(11) **EP 4 681 961 A1**
(43) Date of publication of application: **21.01.2026**
(21) Application number: 25188377.3
(22) Date of filing: 09.07.2025
(51) Int. Cl.: B60K 35/22, B60K 35/53, B60K 35/55, B60K 35/65, B60R 11/02, B60K 35/10

(54) **CONTROL UNIT FOR DISPLAY ADAPTION**

(30) Priority: 16.07.2024 GB 202410371
(71) Applicant: AGCO International GmbH, 8212 Neuhausen am Rheinfall (CH)
(72) Inventor: WEIGAND, Jan, 87616 Marktoberdorf (DE); BARZEN, Alexander, 76275 Ettlingen (DE)
(74) Representative: AGCO Intellectual Property Department

(57) **Abstract**

A control unit (4) of an agricultural machine (2) which is configured to receive sensor data of a sensor system (34), to analyse the sensor data to determine a need of adaption of at least one moveable display (26) and to control an actuator (32) to adapt the at least one moveable display (26).

## Description

### FIELD

The present disclosure relates generally to a movable display and a control unit of an agricultural vehicle for adaption of the moveable display.

### BACKGROUND

U. S. Patent application 2023/0030142, "Rollable Display for Vehicle" filed on May 31, 2022, discloses a rollable display device for a vehicle. The rollable display is wound around a roller part inside of a housing so that the display could be unwound to be extended through an opening in the housing. The patent application also discloses a support part located behind the screen panel to increase the stiffness of the rollable display.

### BRIEF SUMMARY

One or more moveable displays may be used in an operator controlled vehicle or machine to display any kind of information such as a graphical user interface (GUI) to show any operational parameters and/or control the vehicle or the machine. Thus, it would be beneficial to enhance the visual representation of information to an operator when using a moveable display.

According to an aspect of the invention, there is provided an agricultural machine which comprises a control unit, at least one moveable display, an actuator for adapting the moveable display and a sensor system. The control unit is configured to receive the sensor data from the sensor system, to analyse the sensor data to determine a need of adaption of at least one moveable display and to control the actuator to adapt the at least one moveable display.

The agricultural machine may be of any type such as a tractor, a harvester, a combine, a sprayer or any other type of vehicle or vehicle-implement combination.

In contrast to fixed displays, a moveable display has the option to be adjusted on a need of adaption depending on different situations. When the display is moved, the size of the display may be adjusted. For example, the display may be moved in one direction to reduce the size of the display or may be moved in another direction to enlarge the size. The need of adaption can be that the size of the display is not sufficient to show all relevant information to control the agricultural machine. Then, the moveable display should be moved so that all relevant information can be presented to an operator of the agricultural machine. Analogously, the need of adaption may require the moveable display to be moved to prevent a collision and / or to avoid a restricted field of view of the operator of the agricultural machine. In situations in which the presentation of information is not needed or only a couple of information is needed to be presented, the moveable display may be moved to reduce its size. If a display is needed then the moveable display can be moved to enlarge its size so that all relevant information can be presented to the operator of the agricultural machine.

At least one moveable display may be adaptable by a retractable and/or extendable movement.

The display may be retracted to reduce the size of the display or may be extended to enlarge the size of the display. The moveable display may be either partly or fully extended and/or retracted. This would enable various options of adaption of the at least one moveable display according to any situation or preference. For instance, the display may be retracted to prevent a collision between the display and any obstacle in the agricultural machine or may be extended to enlarge the visible area of the display for presenting information to the operator of the agricultural machine. If the display is no longer needed, then the moveable display can be retracted to provide the operator a free field of view out of the windows of the agricultural machine without the display blocking the sight. Hence, the at least one moveable display can be adapted for the individual needs of the operator.

A further aspect of the disclosure provides that the retractable and extendable movement of the at least one moveable display may be performed by rolling, folding or sliding movement.

This feature would be of advantage regarding limitations of space in the cabin of the agricultural machine due to a high number of control elements, since the operator may require free space to feel comfortable. The at least one moveable display may comprise a rotatable spindle to roll-up the display. This may provide a very compact arrangement of the moveable display when it is retracted and enables a volume optimized storing of the moveable display. This may further allow the use of large displays, which are suitable for the various situation because they are moveable. A large display might be needed in some situations to present information to an operator but in other situations a large display might be of disadvantage because the large display would block the operator's field of view or would present a collision risk with the operator or another moving component inside of the agricultural vehicle. If an adaption of the moveable display for enlarging the size is needed, then the rolled-up display could perform a rolling movement induced by the actuator to unroll the display for presenting an enlarged visible part of the display. Instead of a rolling movement, the display may be configured for a folding or sliding movement to provide a compact arrangement when the display is retracted. For example, the display may be folded along one or more axes.

A visible part of the at least one moveable display may be adjustable by the retractable or extendable movement.

Adapting a visible part of at least one moveable display may be advantageous since the visible part, which is visible to an operator of the agricultural machine, could be adjusted so the visible part of the moveable display would have the optimal size to present the information to the operator. In situations in which no presentation of information is required, the at least one moveable display, or to be more precisely the visible part of the at least one moveable display, might fully be retracted, so no information is presented. Then, the moveable display would not block the view of an operator of the agricultural machine. If only minimal information is required, then the at least one moveable display might be partly extended to present some basic information like the time, speed, temperature or other information. By extending the at least one moveable display partly, a compromise could be reached between free field of view for the operator and the presentation of information. If the operator requires more information, then the at least one moveable display may be fully extended. A fully extended display may also be needed if the operator needs to select some functions by actuating the display or any other control element, which actuates a function displayed on the visible part of the display.

The at least one moveable display may be moveable in or out of a housing.

The at least one moveable display could be arranged in a housing or a compartment so it could be safely stored. I. e., the moveable display may be retracted fully or partly in the housing or extended fully or partly out of the housing. When the at least one moveable display is retracted in the housing, the housing would protect the at least one moveable display from any harm caused by a collision or by long sun exposure, which might have negative effects on the lifespan of the display. The at least one moveable display could slide, roll out of a housing or compartment to present the visible part. Furthermore, the at least one moveable display could be folded along one or more axis to be stored in a housing or in a compartment and could be unfolded with an actuator to present the visible part to an operator of the agricultural machine. The housing might be an enclosure directly attached to the moveable display while the compartment might be an enclosed space within the general structure of the agricultural machine. The compartment might be located in the roof of the agricultural machine and the moveable display could be stored in the compartment. The compartment might comprise an opening for the moveable display to be moved through or the compartment might comprise a flap, which could be opened manually or automatically to allow access to the moveable display.

The sensor system may comprise a first sensor providing a sensor area and may be configured to detect a potential collision between the at least one moveable display and an obstacle. Having a first sensor with a sensor area to detect potential collision between the at least one moveable display and any obstacles within the cabin may be advantageous to increase the lifespan of the moveable displays. When an operator moves within the cabin it might come to an unwanted collision between a body part like an elbow and the moveable display. A collision could also occur between the moveable display and another component of the agricultural machine if one or both of these objects are moving. The first sensor could detect an obstacle within the sensor area, which encloses at least partly the moveable display and trigger a reaction. The reaction could be an adaption of the moveable display, a visual or acoustical alarm or any other sort of reaction which would prevent a collision from happening. The first sensor of the sensor system may be a proximity sensor for detecting a potential collision between the at least one moveable display and an obstacle. Such a collision may occur when the moveable display does not automatically stop before colliding against an obstacle when it is moved towards the obstacle. Moreover, a collision might occur for example by rotating a component of the agricultural machine or an operator moving inside of a cabin if the extended display extends or crosses a movement path of the seat or of the operator.

However, the first sensor could be designed in such a way, that the operator could still use the moveable display for example with touch commands when the operator approaches the moveable display from a specific direction, like the front of the moveable display in which the information are presented too, or allowing the contact from specific parts of the operator's body like fingers or a hand with the display.

The sensor area could be set up in such a way that the area in front of the moveable display may not be covered, so an operator could use the moveable display with touch commands to activate functions of the agricultural machine or select specific information for highlighting. Alternatively, an optical sensor like a camera could be used to identify the part of the operator's body which may be moving towards the moveable display. If a hand and/or fingers are detected, then the moveable display may remain extended, so the operator could use touch commands. When another body part like an elbow is detected, then the moveable display might be retracted to prevent an unwanted collision or command from the operator.

The moveable display could include a virtual control element, for example a virtual button, displayed on the moveable display, which could be used by the operator to extend or retract a moveable display manually. Alternatively, there might be a physical control element located on the housing, which could be used by the operator to extend or retract a moveable display manually. Furthermore, the operator might be able to extend or retract the moveable display manually, for example by pulling or pushing.

The first sensor could be located on or in a housing of the moveable display or it could be arranged in the vicinity of the moveable display, i. e. an armrest or another control element.

The control unit may be configured to control the actuator to retract the at least one moveable display if a potential collision between the at least one moveable display and the obstacle is detected.

The retraction of the at least one moveable display may prevent a collision. Preventing the collision from happening in the first place has the major advantage, that the moveable display may not be damaged and the lifespan of the display may not be reduced. In that case, the reaction triggered by the detection of an obstacle could be the retraction of the moveable display by the actuator on command of the control unit.

An obstacle may be any moveable or fixed component in the agricultural machine like a steering wheel, a seat or any parts of the operator like legs, or any other body part which is not the hand or the fingers, in the cabin, for example.

The control unit may be configured to control the actuator to extend the at least one moveable display when the sensor area of the first sensor is free of any obstacle.

When the at least one moveable display is retracted due to the detection of an obstacle in the sensor area of the first sensor, then it would be possible to extend the at least one moveable display once the sensor area is free of any obstacle again. If for example a seat with an attached display is rotated within a cabin, then the movable display attached to the armrest of the seat might be retracted in the vicinity of the steering wheel. After the seat is rotated further and the retracted display has passed the steering wheel so that the obstacle is no longer in the sensor area, then the moveable display may be extended again.

The sensor area of the first sensor of the sensor system may be adaptable by expansion or reduction.

Having a first sensor with an adaptable sensor area may improve flexibility of the sensor system. The sensor area could be adjusted to fit the current state of the visible part of the at least one moveable display. A sensor area of a first sensor adapted to a partly extended moveable display could be smaller than a sensor area of the first sensor adapted to a fully extended moveable display. The sensor area of the first sensor adapted to a fully retracted moveable display could be very small to not unnecessarily trigger any alarms or reactions. In a situation in which the fully extended moveable display would trigger a collision alarm, a partly extended moveable display might not do so. If the sensor area of the first sensor adapted to a fully and a partly extended moveable display would have the same size, then an obstacle in both sensor areas would trigger an alarm. But with an adaptable sensor area, the sensor area of the first sensor adapted to the partly extended moveable display would be smaller than the sensor area of the first sensor adapted to the fully extended moveable display. Therefore, the partly extended moveable display could remain extended in that situation to further provide information to the operator of the agricultural machine while the fully extended moveable display would need to be retracted to prevent a collision between the moveable display and the obstacle.

The sensor area of at least one sensor of the sensor system may be adapted by the control unit based on the adaption of the at least one moveable display, including an expansion of the sensor area when the at least one moveable display may be extended and a reduction of the sensor area when the at least one moveable display may be retracted.

By doing this, the sensor area could be specifically aligned with the at least one moveable display in its various states of adaption. For example, when a fully extended display is retraced without a corresponding reduction of the sensor area, the senor area may be too large. As consequence, the sensor system may determine a potential collision with the display although the display is far away from the obstacle. Hence, the number of incorrect alerts could be reduced by the adaption of the sensor area according to an adaption of the moveable display. For example, the sensor area could be aligned with the moveable display so a moveable display could be partly extended in situations where a fully extended display would trigger a collision alarm with the sensor area for a fully extended moveable display. If an obstacle would be detected in the sensor area of the first sensor of the sensor system adapted to a partly extended moveable display, then the moveable display may be retracted to prevent a potential collision with the obstacle. The sensor area of the first sensor may accordingly also be reduced by command of the control unit.

The adaption of the at least one moveable display and the sensor area of the first sensor of the sensor system may be performed in interval steps.

The adaption performed in interval steps would allow for a completely flexible adjustment by adapting the at least one moveable display and the sensor area of the at least one sensor of the sensor system. The interval steps might correspond to steps with a specific distance. For example, the specific distance may be a ratio of 10% of the length of the fully extended display. Then, the display could be retracted or extended stepwise by this ratio. By using interval step based adjustments, the best solution could be achieved in which the visible part of the display and the sensor area of the first sensor are adjusted only as much as possible to provide a maximum amount of information while simultaneously minimizing the collision risk. The adaption of the sensor area of the first sensor might use the same interval step ratio as the moveable display or may use a different ratio specific for the sensor area.

For clarification, the adaption of the moveable display may refer also to the visible part of the moveable display. The visible part is the part of the display, which may be visible to an operator of the agricultural machine. So, this could refer to the part of the moveable display outside of the housing or compartment, in which the moveable display may be stored, or it may refer to the whole moveable display if there isn't a housing or compartment for the moveable display to be stored in.

The agricultural machine may comprise a rotatable seat. The sensor system may comprise a second sensor configured to detect a rotation angle of the rotatable seat. The control unit may be configured to adapt at least one moveable display based on the rotation angle of the rotatable seat.

The second sensor may be a rotation angle sensor. This sensor may be an alternative or an additional sensor. The second sensor may be integrated in the rotatable seat. The second sensor may possess the advantage of being highly reliable since the second sensor would be located within the rotatable seat and therefore be secure from collision, which could damage the sensor or reduce its lifespan. Also, the second sensor could be a contactless sensor, which would further improve the lifespan of the sensor and make it resilient to wear and tear. Depending on the rotation angle of the rotatable seat, the field of view of the operator may vary. Hence, the field of view of the operator may be considered for the adaption of the moveable display.

The control unit may be configured to retract at least one moveable display when the rotation angle of the rotatable seat is within a predefined collision area, which may define a range of the rotation angle of the rotatable seat in which a need for adaption by retraction of at least one moveable display may be given for preventing a collision between the at least one moveable display and any obstacle, and to extend at least one moveable display once the rotation angle of the rotatable seat may be outside of the predefined collision area.

Hence, a collision between the moveable display and an obstacle may be prevented by the retraction of the moveable display. The definition of specific collision areas beforehand may be an additional security feature by considering already known collisions risks. These collision areas may either be defined by the manufacturer of the agricultural machine or by the operator of the agricultural machine according to his individual needs. A collision area may be defined by a specific range of the rotation angle of the rotatable seat. For example, the predefined collision area may be defined as a range of 15° to 40° of the rotation angle of the rotatable seat since a collision risk may exist between one moveable display with a steering wheel inside of the cabin when the rotatable seat is rotated in a counter clockwise direction. The rotation angle of the rotatable seat may refer to the standard forward facing position of the seat. Forward may refer to the standard driving direction of the agricultural machine along a longitudinal axis extending in the middle of the agricultural vehicle. When the rotatable seat is rotated and the rotation angle of the rotatable seat enters the predefined collision area at 15°, then a need of adaption may be determined by the control unit, which may receive and analyse the sensor data provided from the second sensor of the sensor system. The control unit may send out a command signal to an actuator, which may retract the affected moveable display to prevent a potential collision. Once the rotation angle of the rotatable seat may leave the collision area at 40°, a different need for adaption may be determined by the control unit and a command signal may be send to the actuator to extend the affected moveable display.

The agricultural machine may comprise a cabin, surrounding the rotatable seat, an armrest attached to the rotatable seat, and at least one additional display, which may be located inside the cabin, wherein at least one moveable display may be attached to the armrest and the control unit may be configured to extend or retract the at least one additional moveable display based on the rotation angle of the rotatable seat.

This may have the advantage, that only those moveable displays which may be directly affected by the collision area may be retracted while the other displays can still provide valuable information to the operator of the agricultural machine. The directly affected moveable display could for example be located on the armrest, which may be connected to the rotatable seat. When rotating the rotatable seat, the moveable display attached to the armrest might collide with obstacles like other components or the operator. Therefore, the moveable display attached to the armrest may need to be retracted based on the rotation angle of the rotatable seat while other additional moveable displays may not be directly affected since no collision risk exits. Those additional moveable displays might be located at the pillars of the cabin or behind the steering wheel. But those additional moveable displays may be advantageously still adapted by the control unit by extension or retraction based on the rotation angle of the rotatable seat since only those displays in the field of view of the operator may be required to present information.

Another aspect includes a method of controlling an actuator to adapt at least one moveable display. The method comprises acts for receiving sensor data from a sensor system, analysing the sensor data for determining a need of adaption of at least one moveable display, and controlling an actuator to adapt the at least one moveable display.

As disclosed above, the control unit may be configured to execute different actions. Each action may be implemented as one or more method acts of the method executable by the control unit. Hence, each action for which the control unit is configured to execute may be defined as a method acts.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine.
FIG. 2 illustrates a control unit.
FIG. 3 illustrates the connections of a control unit.
FIG. 4 illustrates a simplified top view in a cabin of the agricultural machine including a rotation area and predefined collision areas.
FIG. 5a-f illustrate a moveable display attached to an armrest.
FIG. 6a-c illustrate a moveable display attached to an armrest.
FIG. 7 illustrates a flow chart diagram of a first method.
FIG. 8 illustrates another flow chart diagram of a second method.

### DETAILED DESCRIPTION

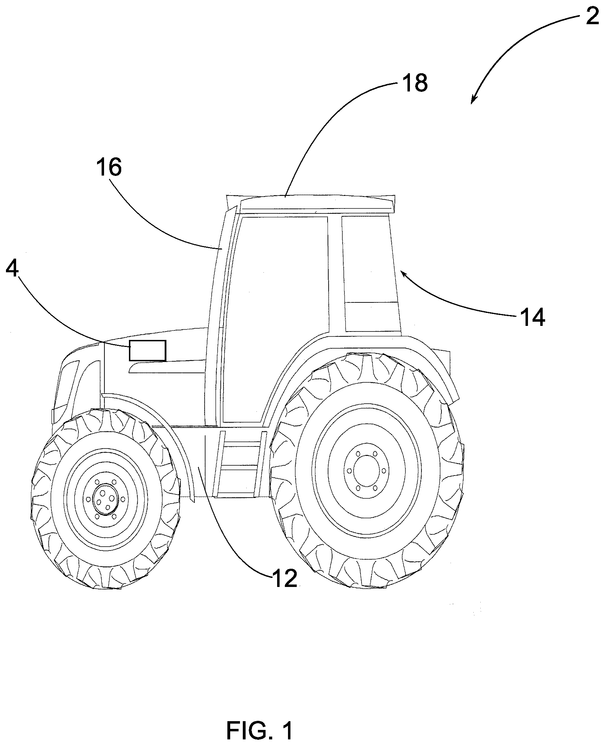

FIG. 1 illustrates an agricultural machine 2. The agricultural machine 2 may be a vehicle or a vehicle-implement combination. The vehicle may generate a tractive force to tow the implement through the agricultural field. The implement may be fixed to the vehicle or detachably connected with the vehicle. The agricultural machine 2 may be an agricultural vehicle such as a tractor, a harvester, a combine, a sprayer or of any other type such as a truck. The implement may be used for an operation in the agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, and other known implements, which are commonly used in combination with an agricultural vehicle. The agricultural machine 2 comprises a chassis 12 and a cabin 14 attached to the chassis 12. The cabin 14 comprises pillars 16 and a roof 18 on top of the cabin 14 to surround a space for an operator of the agricultural machine 2. An electronic control unit 4 is integrated in the agricultural machine 2.

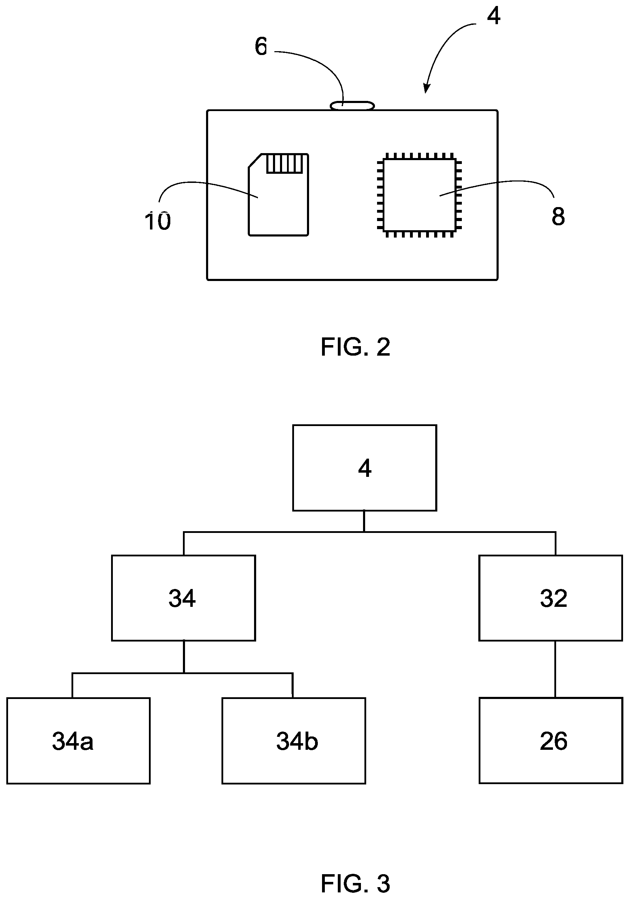

FIG. 2 shows the control unit 4 comprising an I/O interface 6, a controller 8 and a memory 10. The I/O interface 6, the controller 8 and the memory 10 may be attached to a printed circuit board (PCB). The control unit 4 may receive and send signals or data via the I/O interface 6. The I/O interface 6 may be a wireless interface or a connector. The controller 8 may store the data or signals received by the control unit 4 in the memory 10. The memory 10 may contain additional data or executable computer program products, for example in terms of a computer-implemented method, that may be retrieved, processed or executed by the controller 8. Data or signals resulting from the processing of data or signals or from the execution of a computer program product may be stored to the memory 10 or sent to the I/O interface 6 by the controller 8.

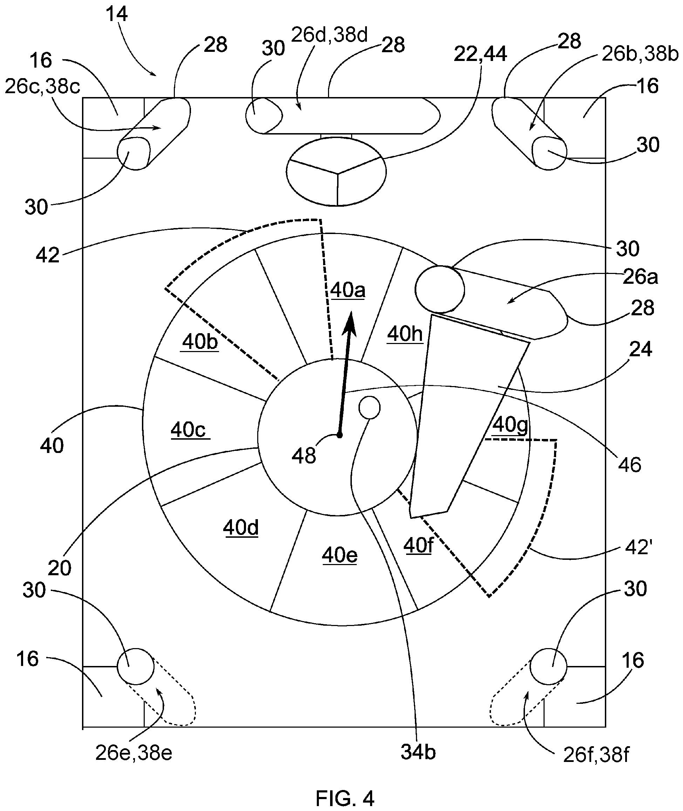

FIG. 3 shows a block diagram with the control unit 4 being in connection with a sensor system 34 which comprises a first sensor 34a and a second sensor 34b. The control unit 4 is also connected to an actuator 32 of the at least one moveable display 26 either by wire or wirelessly. The sensor system 34 transfers data gathered by the first sensor 34a and / or the second sensor 34b to the control unit 4. The control unit 4 receives the sensor data from the sensor system 34 and analyses the sensor data to determine a need of adaption for at least one moveable display 26 (shown in FIG. 4 - 6c). When a need of adaption for a moveable display 26 is determined, then the control unit 4 sends out a command signal to the actuator 32. The actuator 32 receives the command signal from the control unit 4 and adapts the moveable display 26 with a retraction or extension movement.

FIG. 4 illustrates an interior of the cabin 14 of the agricultural machine 2. The cabin 14 comprises the pillars 16, in this case four pillars 16, to secure the roof 18 of the cabin 14. The cabin 14 encloses an operator space, in which an operator can operate the agricultural machine 2. The cabin 14 encloses a steering wheel 22 for an operator to control the steering of the agricultural machine 2, a rotatable seat 20, and an armrest 24 attached to the seat 20. Multiple moveable displays 26a to 26f in terms of display 26 are arranged inside of the cabin 14 to display information to the operator of the agricultural machine 2 when needed. Each of the displays 26a to 26f are controllable by a corresponding actuator 32 as display 26 shown in FIG. 3. Each moveable display 26a to 26f comprises a housing 30 in which a visible part 28 of each of the displays 26a to 26f can be retracted in or extended from by the corresponding actuator 32. As can be seen in FIG. 4, the moveable displays 26b, 26c, 26e, and 26f are attached each to a pillar 16 of the cabin 14. Moveable display 26d is located behind the steering wheel 22 and moveable display 26a is attached to the armrest 24. Additional to the moveable display 26a, the armrest 24 comprises multiple control elements so the operator can control specific functions of the agricultural machine 2. Each of the moveable displays 26a to 26f, which is not directly attached to the armrest 24 or the rotatable seat 20 is considered as an additional (moveable) display. Thus, moveable displays 26b to 26f are therefore additional moveable displays (in contrast to moveable display 26a). Similar to moveable display 26a, the additional moveable displays 26b to 26f are also extended and retracted in dependence of the rotation angle of the rotatable seat 20.

The rotatable seat 20 is rotatable within a rotation range. The rotation range of the rotatable seat 20 is divided into seven rotation areas 40a to 40h.

The second sensor 34b of the sensor system 34 is arranged at the rotatable seat 20 to measure the rotation angle of the rotatable seat 20 indicated by an arrow 46. The direction of the arrow 46 shows the direction the seat 20 is facing. The arrow 46 originates from a vertical rotation axis 48 of the rotatable seat 20. The rotatable seat 20 rotates around the vertical rotation axis 48. When rotatable seat 20 is rotated, then the rotation angle is changed and the arrow 46 will rotate around the vertical rotation axis 48. The rotatable seat 20 can be rotated steplessly through all rotation areas 40a to 40h. As exemplarily shown in Fig. 4, the arrow 46 indicates that the rotatable seat 20 is facing the rotation area 40a. At this position, the rotatable seat 20 is oriented towards the steering wheel 22 so that an operator sitting in the seat 20 can control the same. Based on the rotation angle of the rotatable seat 20, a field of view of the operator can be estimated by the control unit 4. Therefore, each of the additional moveable displays 26b to 26f can be extended if it is estimated that the corresponding display is in the field of view of the operator to present information to the operator.

The second sensor 34b is a rotation angle sensor which might utilize the changes in the magnetic field when a ferromagnetic element connected to the rotatable seat is moved close to the second sensor 34b to detect the rotation angle of the rotatable seat 20. The changes in the magnetic field induce a current flow and the voltage can be measured to determine the rotation angle. But other variants of rotation angle sensor are also possible like optical sensors or Hall-sensors. The sensor data gathered by the second sensor 34b of the sensor system 34 is send to the control unit 4 so the control unit 4 can determine a need of adaption for each of the moveable displays 26a to 26f. If a need for adaption for one of the displays 26a to 26f is determined, then the control unit 4 sends a command signal to the corresponding actuator 32 of the display to adapt the moveable display.

Additionally, two collision areas 42, 42' define two ranges each covering a part of the rotation areas 40a to 40h. If the rotation angle of the rotatable seat 20 corresponds with one of the collision areas 42, 42' (i. e., if the rotatable seat 20 is facing one of the collision areas 42, 42'), the rotation angle of the rotatable seat 20 is within a collision area and a need for adaption of at least one moveable display 26a to 26f is given for preventing a collision between the at least one moveable display 26a to 26f and an obstacle 44 (see Fig. 4). Locations and dimensions of the collision areas 42, 42' are stored in the memory 8 of the control unit 4. The collision areas 42, 42' are pre-defined by the manufacturer of the agricultural machine 2. Furthermore, the operator of the agricultural machine 2 could adjust the already pre-defined collision areas 42, 42' or define additional collision areas 42, 42' with a human machine interface. This can be done either on the agricultural machine 2 or at a remote location. The moveable display 26a may be affected by the collision areas 42, 42' if the rotation angle of the rotatable seat 20 is within a collision area 42, 42'. This may be the case, if the rotatable seat 20 is facing one of the collision areas 42, 42'. This would be the case if the rotatable seat 20 would be rotated some degrees counter-clockwise from the position as shown in Fig. 4 (until the arrow 46 directs to/enters the collision area 42). Then, there is a risk of a collision between the moveable display 26a attached to the armrest 24 and the steering wheel 22 or another obstacle 44. Thus, a need for adaption is given for the moveable display 26a. In response thereof, the visible part 28 of the moveable display 26a is retracted by the actuator 32 into the housing 30 to avoid a collision.

The visible parts 28 of each of the moveable displays 26a to 26f are extended and retracted from their corresponding housings 30 based on the current rotation area 40a to 40h the rotatable seat 20 is facing. The control unit 4 receives the rotation angle of the rotatable seat 20 from the second sensor 34b to determine the current rotation area 40a to 40h the rotatable seat 20 is facing. In dependence of the current rotation area of the seat 20, the control unit 4 controls the actuators 32 of the displays 26a to 26f for extension or retraction. For example, when the rotatable seat 20 is facing a part of the rotation area 40a not covered by the collision area 42, displays 26a to 26d would be extended while displays 26e and 26f would be fully retracted. Instead, if the rotatable seat 20 is facing a part of the rotation area 40a covered by the collision area 42, then moveable displays 26b, 26c, and 26d would be extended while moveable displays 26a, 26e, and 26f are retracted. When the rotatable seat 20 is facing rotation area 40e for example, displays 26a, 26e and 26f would be extended while displays 26b, 26c, and 26d would be retracted into their housings 30 since they are out of the operator's view at the moment. Hence, the displays 26b, 26c, and 26d are protected from sun exposure and do not block the line of sight to the outside of the cabin 14 if the operator would turn in his seat.

The following table 1 displays which moveable displays 26a to 26f are extended or retracted in dependence of the individual rotation areas 40a to 40h while considering the collision areas 42, 42'.

**Table 1**

| **Rotation Area faced by seat 20** | **Collision Area faced by seat 20** | **Moveable Displays Extended** | **Moveable Displays Retracted** |
|---|---|---|---|
| 40a | No | 26a, 26b, 26c, 26d | 26e, 26f |
| 40a | Yes | 26b, 26c, 26d | 26a, 26e, 26f |
| 40b | Yes | 26c, 26d | 26a, 26b, 26e, 26f |
| 40b | No | 26a, 26c, 26d | 26b, 26e, 26f |
| 40c | No | 26a, 26c, 26e | 26b, 26d, 26f |
| 40d | No | 26a, 26e | 26b, 26c, 26d, 26f |
| 40e | No | 26a, 26e, 26f | 26b, 26c, 26d |
| 40f | No | 26a, 26f | 26b, 26c, 26d, 26e |
| 40f | Yes | 26f | 26a, 26b, 26c, 26d, 26e |
| 40g | Yes | 26b, 26f | 26a, 26c, 26d, 26e |
| 40g | No | 26a, 26b, 26f | 26c, 26d, 26e |
| 40h | No | 26a, 26b, 26d | 26c, 26e, 26f |

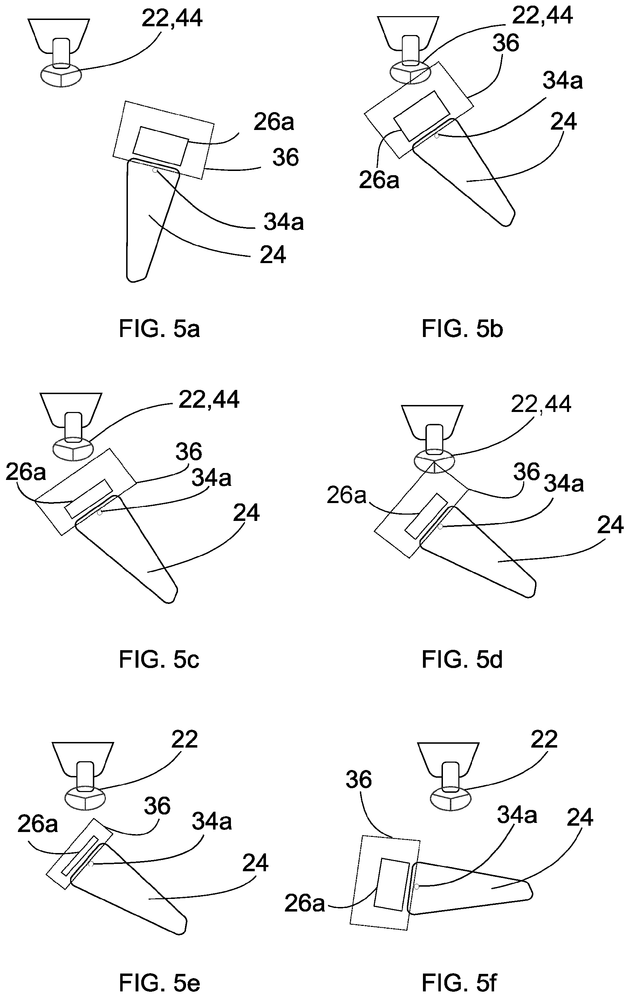

FIG. 5a - 5f illustrate the moveable display 26a attached to the armrest 24. The first sensor 34a is located on the armrest 24 and is configured to detect any objects. For example, the first sensor 34a is a proximity sensor. The first sensor 34a comprises a sensor area 36 which surrounds the moveable display 26a to detect any obstacles 44 in proximity to the moveable display 26a. An obstacle 44 may be any moveable or fixed component in the cabin 14 of the agricultural machine 2 like a steering wheel 22, a rotatable seat 20 or any body parts of the operator except arm or fingers such as legs, for example. When the armrest 24 is rotated in direction to the steering wheel 22 as shown in Fig. 5b, the control unit 4 receives and analyses the sensor data from the sensor system 34 and detects the steering wheel 22 as an obstacle 44 in the sensor area 36. Due to a potential collision of the rotating armrest 24 with the obstacle 44, here the steering wheel 22, there is a need for adaption for the moveable display 26a. In response thereof, the control unit 4, sends out a command signal to the actuator 32 of the display 26a to retract the moveable display 26a to prevent the potential collision. The display 26a may be retracted in interval steps instead of retracting the display 26a completely.

Since the dimensions of the moveable display 26a are reduced by the retraction of the moveable display 26a, the sensor area 36 can be reduced accordingly. Hence, a command signal is sent from the control unit 4 to the first sensor 34a so that the sensor area 36 is reduced as exemplarily indicated in FIG. 5c.

The reduction of the sensor area 36 may be done in interval steps. If the armrest 24 is rotated further, the obstacle 44 may intrude in the sensor area 36 as illustrated in FIG. 5d. Then, the rotational movement of the armrest 24 may be stopped by the control unit 4 while the retraction of the moveable display 26a and the reduction of the sensor area 36 are continued in interval steps as shown in FIG. 5e until the moveable display 26a can pass the obstacle 44 without any collision. When the moveable display 26a has been retracted sufficiently, the moveable display 26a passes the obstacle 44 by further rotational movement (see Fig. 5f). After the moveable display 26a has passed the obstacle 44, the control unit 4 controls the first sensor 34a to extend the sensor area 36 again. The sensor area 36 can be extended fully when no obstacle 44 is detected by the control unit 4 in the sensor area 36 as illustrated in FIG. 5f. So, as explained above, the adaption of the sensor area 36 of the first sensor 34a of the sensor system 34 may be controlled in synchronization with the adaption of the moveable display 26a by extension and retraction.

Analogously to the movable display 26a and the sensor area 36, the additional moveable displays 26b to 26f and their corresponding sensor areas 36 of their first sensors 34a may be controlled by the control unit 4.

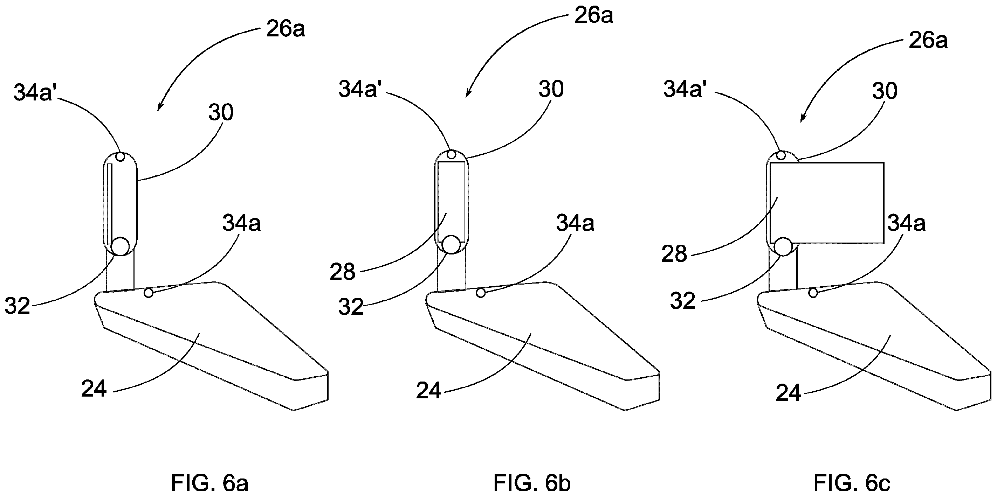

FIG. 6a, 6b, and 6c illustrate different extension states of the visible part 28 of the moveable display 26a. The housing 30 of the moveable display 26a is attached to the armrest 24 and extends vertically therefrom. In FIG. 6a, the visible part 28 of the moveable display 26a is completely retracted into the housing 30 to secure it from any harm. After the actuator 32 receives a command signal from the control unit 4 once the control unit 4 has determined a need for adaption for the moveable display 26a, the actuator 32 adapts the visible part 28 by rolling the visible part 28 about an axis extending vertically in the housing 30. Alternatively to the rolling movement of the moveable display 26a, the movement might be a folding or a sliding movement depending on the type of the moveable display 26a. In any case, the visible part 28 can be extended out of the housing 30 or retracted into the housing 30. In FIG. 6b, the visible part 28 is extended partly to display limited information to the operator of the agricultural machine 2. In FIG. 6c, the visible part 28 of the moveable display 26a is fully extended to provide as much information as possible to the operator.

As exemplarily illustrated in Fig. 6a to 6c, the moveable display 26a can be moved out of the vertical extending housing 30 in a lateral direction. Analogously, the moveable display 26a may be moved in as illustrated in Fig. 6c to Fig. 6a. But any other arrangement of the housing 30 and the moveable may be possible. For example, the housing 30 of the moveable display 26a could be fully integrated in the armrest 24. The housing 30 could be manually or automatically pivotable about an axis to store away the moveable display 26a in the armrest 24. The angle of the moveable display 26a could be adjusted manually or automatically. The actuator 32 can be located inside of the housing 30 to adapt the visible part 28 of the moveable display 26a. The first sensor 34a of the sensor system 34 can be located on the armrest 24. Alternatively, the first sensor 34a could be located on any other suitable location as indicated by the first sensor 34a' integrated in the housing 30 of the moveable display 26a.

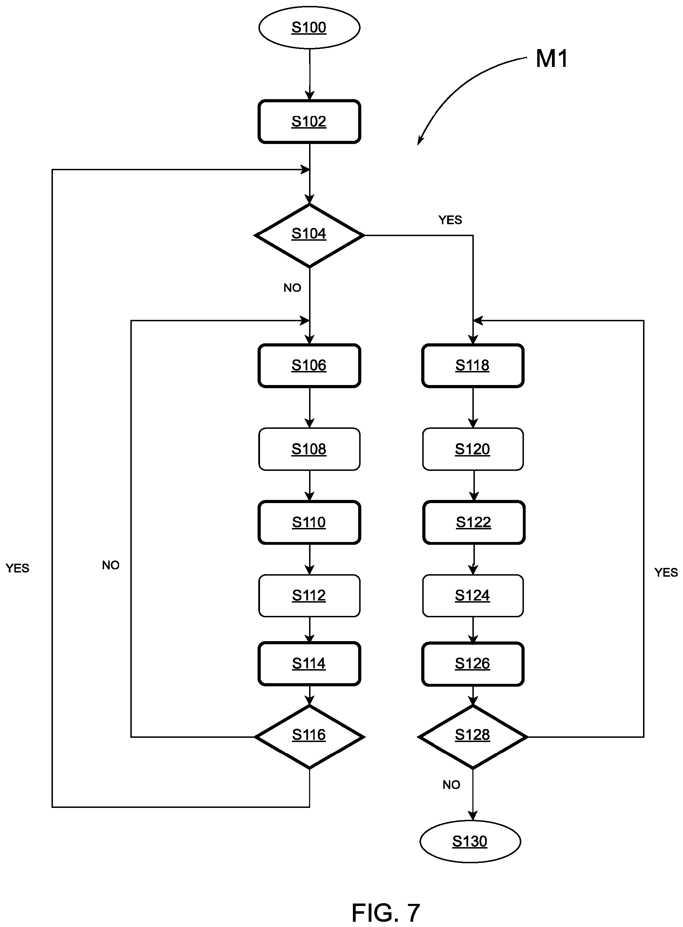

FIG. 7 illustrates a flow chart diagram of a first method M1 for controlling the actuator 32 to adapt any one of the moveable displays 26a to 26f of the agricultural machine 2. The method starts with act S100 and proceeds to act S102.

At act S102, the sensor system 34, which includes the first sensor 34a, gathers data and sends the data to the control unit 4, which receives the sensor data. Then, method M1 proceeds to act S104.

At act S104, the sensor data is analysed by the control unit 4 to identify any object within the sensor area 36 of the first sensor 34a. If no object or obstacle 44 is detected by the control unit 4 in the sensor area 36, the control unit 4 proceeds with act S106. Otherwise, the method proceeds with act S118.

At act S106, the control unit 4 determines all moveable displays 26a to 26f for which a need of adaption has been detected. For example, a need of adaption for the moveable display 26a is detected by the control unit 4 when an object is detected within the sensor area 36 of the first sensor 34a. When no object / obstacle 44 is detected within the sensor area 36 of the first sensor 34a assigned to the moveable display 26a then a need for adaption by extension of the moveable display 26a is given. When an object / obstacle 44 is detected within the sensor area 36, then a need for adaption by retraction of the moveable display 26a is given. In response to the detected need for adaption due to the absence of an object / obstacle 44 within the sensor area 36, the control unit 4 commands the actuator 32 of the corresponding moveable display 26a to be extended. Analogously as described above, act S106 may also be applied to determine any one of the additional moveable displays 26b to 26f for which a need of adaption has been detected. Then, method M1 proceeds with act S108.

At act S108, the corresponding actuators 32 of the moveable displays 26a to 26f receive the command signals and extend the corresponding moveable displays 26a to 26f for one interval step. Then, method M1 proceeds with act S110.

At act S110, the control unit 4 sends out a command signal to the sensor system 34 of the moveable display 26a to expand the sensor area 36 of the first sensor 34a for one interval step. Hence, the sensor area 36 of the first sensor 34a will be adapted based on the adaption of the corresponding moveable display 26a. Analogously, act S110 may also be applied to expand the sensor area of the sensors of the additional moveable displays 26b to 26f. Then, method M1 proceeds with act S112.

At act S112, the sensor system 34 receives the command signal and expands the sensor area 36 of the first sensor 34a of the moveable display 26a and the sensor areas of the sensors of the additional moveable displays 26b to 26f by one interval step accordingly. Then, method M1 proceeds with act S114.

At act S114, the sensor system 34 which includes the first sensor 34a of the moveable display 26a and the sensors of the additional moveable displays 26b to 26f gather data and sends the data to the control unit 4. Then, method M1 proceeds with act S116.

At act S116, the control unit 4 receives the sensor data from the sensor system 34 with the adapted sensor areas of the sensors of the moveable displays 26a to 26f and analyses the sensor data. If the control unit 4 determines that no object / obstacle 44 is detected in any one of the sensor areas, then the method loops back to repeat the acts beginning with act S106. If the control unit 4 determines that an object is detected in any one of the sensor areas then the method loops back to act 104.
If an object is detected in act S104, a potential collision between the corresponding moveable display 26a to 26f and the object /obstacle 44 might occur.
Then, the method continues with act S118, in which the control unit 4 determines all moveable displays 26a to 26f for which a need of adaption has been detected. For example, a need of adaption for the moveable display 26a is detected by the control unit 4 if an object is detected within the sensor area 36 of the first sensor 34a. When no object / obstacle 44 is detected within the sensor area 36, then a need for adaption by extension of the moveable display 26a is given. When an object / obstacle 44 is detected within the sensor area 36, then a need for adaption by retraction of the moveable display 26a is given. In response to the detected need for adaption due to the presence of an object / obstacle 44 within the sensor area 36, the control unit 4 commands the actuator 32 of the moveable display 26a to be retracted. Analogously as described above, act S118 may also be applied to determine any one of the additional moveable displays 26b to 26f for which a need of adaption has been detected. Then, method M1 proceeds with act S120.

At act S120, the corresponding actuators 32 of the moveable displays 26a to 26f receive the command signals and retract the corresponding moveable displays 26a to 26f for one interval step. Then, method M1 proceeds with act S122.

At act S122, the control unit 4 sends out a command signal to the sensor system 34 to adapt the sensor area 36 of the first sensor 34a by reduction of the first sensor 34a for one interval step. Hence, the sensor area 36 of the first sensor 34a of the moveable display 26a will be adapted based on the adaption of the corresponding moveable display 26a. Analogously, act S122 may also be applied to shrink the sensor area of the sensors of the additional moveable displays 26b to 26f. Then, method M1 proceeds with act S124.

At act S124, the sensor system 34 receives the command signal and adapts the sensor area 36 of the first sensor 34a of the moveable display 26a and the sensor areas of the sensors of the additional moveable displays 26b to 26f by a reduction of one interval step accordingly. Then, method M1 proceeds with act S126.

At act S126, the sensor system 34 which includes the first sensor 34a of the of the moveable display 26a and the sensors of the additional moveable displays 26b to 26f gathers data and sends the data to the control unit 4. Then, method M1 proceeds with act S128.

At act S128, the control unit 4 receives the sensor data from the sensor system 34 with the adapted sensor areas of the sensors of the moveable displays 26a to 26f and analyses the sensor data. If an object / obstacle 44 is detected by the control unit 4 in any one of the sensor areas then the method loops back to repeat the acts beginning with act S118. If no object / obstacle 44 is detected in any one of the sensor areas then the method M1 ends with act S130. The method M1 may be restarted by the control unit 4 again.

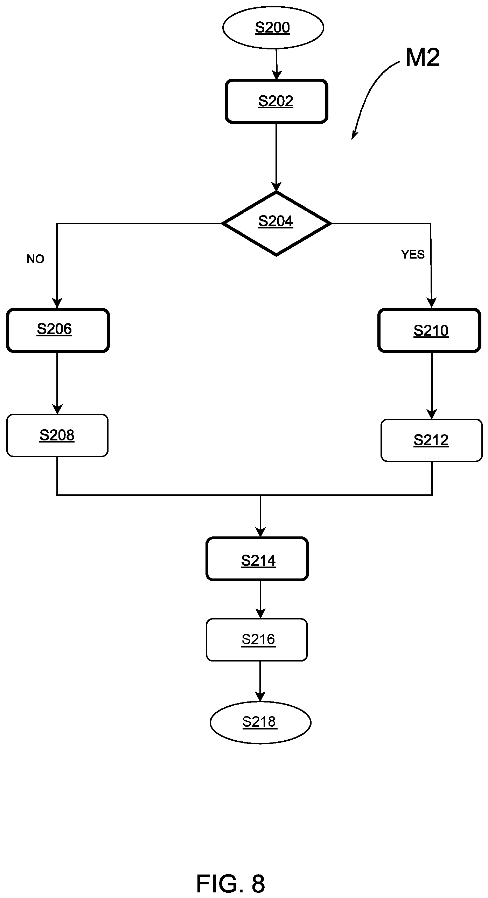

FIG. 8 illustrates a flow chart diagram of a second method M2 for controlling the actuator 32 to adapt any one of the moveable displays 26a to 26f connected with the sensor system 34 comprising the second sensor 34b. The method M2 illustrated by this flow chart diagram starts with act S200.

The second sensor 34b of the sensor system 34 gathers data about the rotation angle of the rotatable seat 20 and sending the data to the control unit 4 which receives the sensor data in act S202.

The control unit 4 analyses whether the rotation angle of the rotatable seat 20 is in a predefined collision area 42, 42' in act S204 so that the rotatable seat 20 is facing the one of the collision areas 42, 42'. If the rotation angle of the rotatable seat 20 is in the predefined collision area 42, 42', a need for adaption in terms of a retraction of the moveable display 26a by its corresponding actuator 32 is given to prevent a potential collision between the moveable display 26a and any obstacle 44. If the control unit 4 analyses that the rotation angle of the rotatable seat 20 is in the predefined collision area 42, 42', then method M2 proceeds to act S210. If the rotation angle of the rotatable seat 20 is currently outside of the collision area 42, 42', then the method M2 proceeds to act S206.

At act S206, the control unit 4 sends out a command signal to the actuator 32 of the moveable display 26a to extend the moveable display 26a. Then method M2 proceeds to act S208.

At act S208, the actuator 32 of the moveable display 26a receives the command signal of the control unit 4 and extends accordingly the moveable display 26a (analogously as described above). Then the method proceeds with act S124.

If it was determined by the control unit 4 that the rotation angle of the rotatable seat 20 is within a collision area 42, 42', then the control unit 4 sends out a command signal to the actuator 32 of the moveable display 26a to retract the moveable display 26a at act S210. Then method M2 proceeds with act S212.

At act S212, the actuator 32 of the moveable display 26a receives the command signal of the control unit 4 and retracts accordingly the moveable display 26a (analogously as described above). Then method M2 proceeds with act S124.

At act S214, the control unit 4 determines a need of adaption for at least one of the additional moveable displays 26b to 26f. A need of adaption for the at least one of the additional moveable displays 26b to 26f is determined based on the current rotation angle of the rotatable seat 20 sensed by the second sensor 34b. Based on the current rotation angle of the rotatable seat 20, it can be estimated by the control unit 4 which of the additional moveable displays 26b to 26f are in the operator's field of view and which not. A display to be estimated to be in the operator's field of view needs to be extended, while a display to be estimated to be out of the operator's field of view needs to be retracted. Therefore, the control unit 4 sends out command signals to the actuators 32 of the corresponding moveable displays 26b to 26f to adapt the additional moveable displays 26b to 26f based on the current rotation angle of the rotatable seat 20. The control unit 4 controls the moveable displays 26b to 26f according to the control scheme as defined in table 1. As described above, table 1 shows which moveable displays 26b to 26f are to be extended or retracted in dependence of the corresponding rotation area 40a to 40h faced by the rotatable seat 20 and in dependence of the fact whether a collision area 42, 42' is faced by the rotatable seat 20. For example, when the rotation angle of the rotatable seat 20 is in a part of the rotation area 40a not covered by the collision area 42 as exemplarily shown in Fig. 4 then moveable displays 26b, 26c and 26d need to be extended and movable displays 26e and 26f need to retracted. But when rotatable seat 20 is rotated in a part of the rotation area 40b covered by the collision area 42 then moveable displays 26c and 26d need to be extended and movable displays 26b, 26e and 26f need to retracted. Then, method M2 proceeds with act S216.

At act S216 the corresponding actuators 32 of the additional moveable displays 26b to 26f receive the command signal from the control unit 4 and adapt the additional moveable displays 26b to 26f accordingly by extension or retraction. Thus, the additional moveable displays 26b to 26f are adjusted in dependence of the corresponding rotation area 40a to 40h faced by the rotatable seat 20 and in dependence of the fact whether a collision area 42, 42' is faced by the rotatable seat 20 (or not).

Afterwards, the method M2 ends with act S218. The method M2 may be restarted by the control unit 4 again. Alternatively, method M1 is automatically started after act S218.

All references cited herein are incorporated herein in their entireties. If there is a conflict between definitions herein and in an incorporated reference, the definition herein shall control.

**LISTING OF DRAWING ELEMENTS**

| | |
|---|---|
| 2 Agricultural machine | 12 Chassis |
| 4 Control unit | 14 Cabin |
| 6 Interface | 16 Pillar |
| 8 Controller | 18 Roof |
| 10 Memory | 20 Seat |
| 22 | Steering Wheel |
| 24 | Armrest |
| 26a -26f | Moveable display |
| 28 | Visible Part |
| 30 | Housing |
| 32 | Actuator |
| 34 | Sensor system |
| 34a, 34a' | First sensor (Proximity sensor) |
| 34b | Second sensor (Rotation sensor) |
| 36 | Sensor area |
| 40 | Rotation area |
| 42, 42' | Collision area |
| 44 | Obstacle |
| 46 | Arrow |
| 48 | Vertical rotation axis |
| M1 | First Method |
| M2 | Second Method |

## Claims

1. An agricultural machine (2) comprising,
a control unit (4);
at least one moveable display (26);
an actuator (32) for adapting the moveable display (26);
a sensor system (34);
wherein the control unit (4) is configured to:
receive sensor data from the sensor system (34);
analyse the sensor data for determining a need of adaption of the at least one moveable display (26); and
control the actuator (32) to adapt the at least one moveable display (26).

2. An agricultural machine (2) according to claim 1, wherein
the at least one moveable display (26) is adaptable by a retractable and/or extendable movement.

3. An agricultural machine (2) according to claim 2, wherein
the retractable or extendable movement of the at least one moveable display (26) corresponds to a rolling or folding or sliding movement.

4. An agricultural machine (2) according to any one of claims 2 or 3,
wherein a visible part (28) of the at least one moveable display (26) is adjustable by the retractable or extendable movement.

5. An agricultural machine (2) according to any one of the preceding claims,
wherein the at least one moveable display (26) is moveable in or out of a housing (30).

6. An agricultural machine (2) according to any one of the preceding claims, wherein the sensor system (34) comprises a first sensor (34a) providing a sensor area (36) and being configured to detect a potential collision between the at least one moveable display (26) and an obstacle (44).

7. An agricultural machine (2) according to claim 6, wherein
the control unit (4) is configured to control the actuator (32) to retract the at least one
moveable display (26) if a potential collision between the at least one moveable display (26) and the obstacle (44) is detected.

8. An agricultural machine (2) according to any one of claims 6 to 7,
wherein the control unit (4) is configured to control the actuator (32) to extend the at least one moveable display (26) when the sensor area (36) of the first sensor (34a) is free of any obstacle.

9. An agricultural machine (2) according to any one of claims 6 to 8,
wherein the sensor area (36) of the first sensor (34a) of the sensor system (34) is adaptable by expansion or reduction.

10. An agricultural machine (2) according to claim 9, wherein
the control unit (4) is configured to adapt the sensor area (36) of the first sensor (34a) of the sensor system (34) based on the adaption of the at least one moveable display (26), including
an expansion of the sensor area (36) when the at least one moveable display (26) is extended; and
a reduction of the sensor area (36) when the at least one moveable display (26) is retracted.

11. An agricultural machine (2) according to claim 10,
wherein the adaption of the at least one moveable display (26) and the sensor area (36) of the first sensor (34a) of the sensor system (34) is performed in interval steps.

12. An agricultural machine (2) according to any one of the preceding claims, comprising
a rotatable seat (20);
wherein the sensor system (34) comprises a second sensor (34b) configured to detect a rotation angle of the rotatable seat (20); and
wherein the control unit (4) is configured to adapt the at least one moveable display (26) based on the rotation angle of the rotatable seat (20).

13. An agricultural machine (2) according to claim 12,
wherein the control unit (4) is configured
to retract the at least one moveable display (26) when the rotation angle of the rotatable seat (20) is within a predefined collision area (42, 42'), which defines a range of the rotation angle of the rotatable seat (20) in which a need for adaption by retraction of at least one moveable display (26) is given for preventing a collision between the at least one moveable display (26) and any obstacle (44); and
to extend the at least one moveable display (26) when the rotation angle of the rotatable seat (20) is outside of a collision area (42, 42').

14. An agricultural machine (2) according to claim 13, comprising a cabin (14) surrounding the rotatable seat (20);
an armrest (24) attached to the rotatable seat (20);
at least one additional display (26b - 26f), which is located inside the cabin (14); wherein
the at least one moveable display (26) is attached to the armrest (24); and
the control unit (4) is further configured to extend or retract the at least one additional display (26b - 26f) based on the rotation angle of the rotatable seat (20).

15. A method of controlling an actuator (32) to adapt at least one moveable display (26) of an agricultural machine (2), comprising:
receiving sensor data from a sensor system (34);
analysing the sensor data for determining a need of adaption of the at least one moveable display (26); and
controlling the actuator (32) to adapt the at least one moveable display (26).
